# EUROPEAN PATENT SPECIFICATION

(11) **EP 2 602 888 B1**
(45) Date of publication and mention of the grant of the patent: **25.11.2015**
(21) Application number: 12195530.6
(22) Date of filing: 04.12.2012
(51) Int. Cl.: H02G 3/12

(54) **Releasable locking with angular adjustability**
Lösbare Sperrvorrichtung mit Winkeleinstellbarkeit
Verrouillage libérable avec capacité d'ajustement d'angle

(30) Priority: 09.12.2011 IN CH43022011
(43) Date of publication of application: 12.06.2013
(73) Proprietor: Schneider Electric Industries SAS, 92500 Rueil-Malmaison (FR)
(72) Inventor: Sharma, Suneet, 560 066 Bangalore (IN)
(74) Representative: Ottazzo, Marco Francesco Agostino

(56) References cited:
- WO-A1-96/14682
- WO-A1-03/081054
- WO-A2-01/65655
- US-A- 5 944 210
- US-B1- 6 720 512

## Description

### FIELD OF THE INVENTION

The invention generally relates to mounting of electrical boxes on a surface such as wall. In particular, the invention relates to releasable snap locking with angular adjustability to install or mount devices to boxes. For example, the boxes may be wall mounted electrical boxes.

### BACKGROUND OF THE INVENTION

Generally the electrical boxes are mounted on a resting surface such as wall. In the event of oblique mounting of the electrical box, the final assembly can still be aligned straight if the electrical box or any fixing components of the electrical box offer angular adjustability mechanism. Mostly the conventional electrical boxes include key slots and screws to provide such angular adjustability.

Conventionally screws are made of metal or metallic elements. As live electrical wires pass through the electrical boxes, it is desirable to avoid use of such metal parts in the electrical boxes.

Further screws are additional parts in the assembly, and have quite a role in the cost of the product. And most of the time, they are factory assembled. Hence screws add additional burden in the assembly line.

Additionally in order to provide better grip, the screws are made longer and require too many turns to tighten them into the box through fixing frames. For installation of multiple electrical boxes this process is time consuming.

Further use of screws in the electrical boxes makes it necessary to use screw drivers or other tools whenever any adjustment is required to be made.

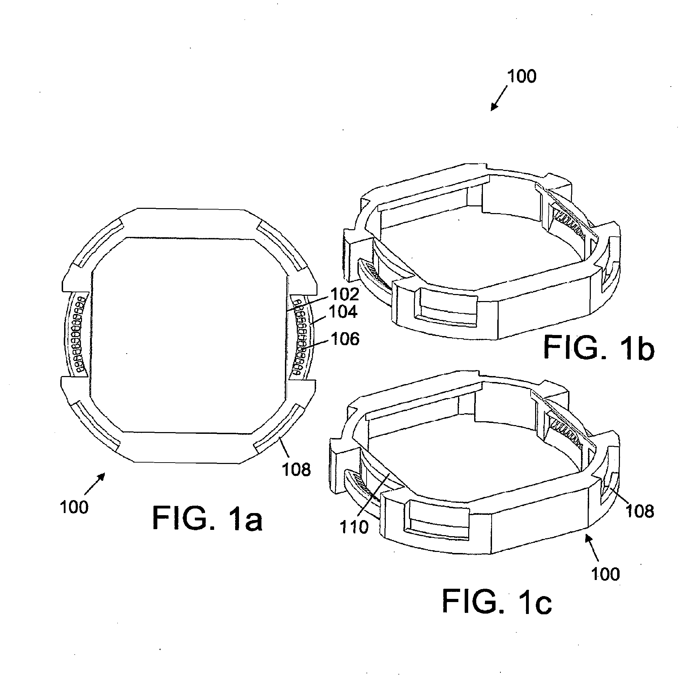

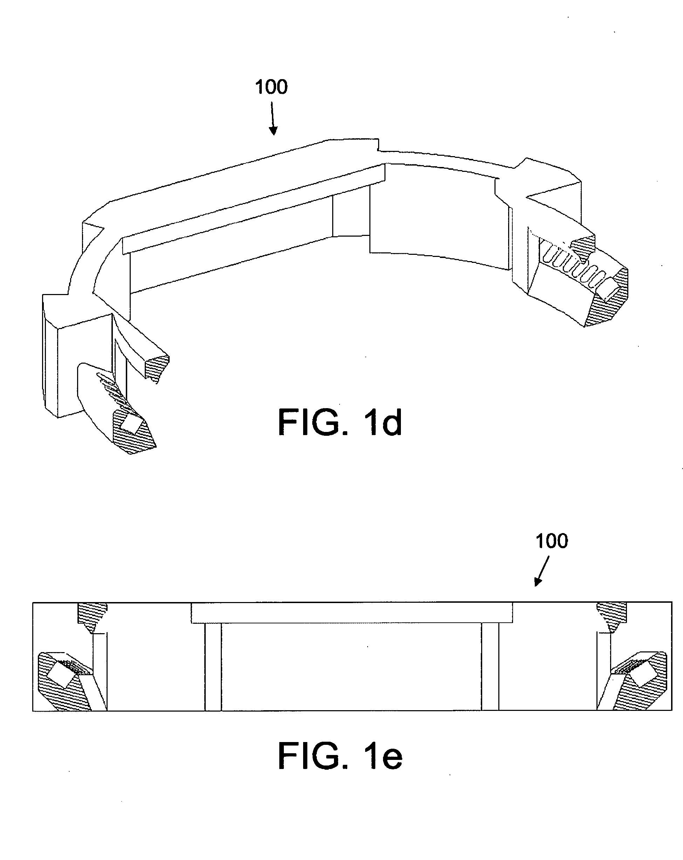

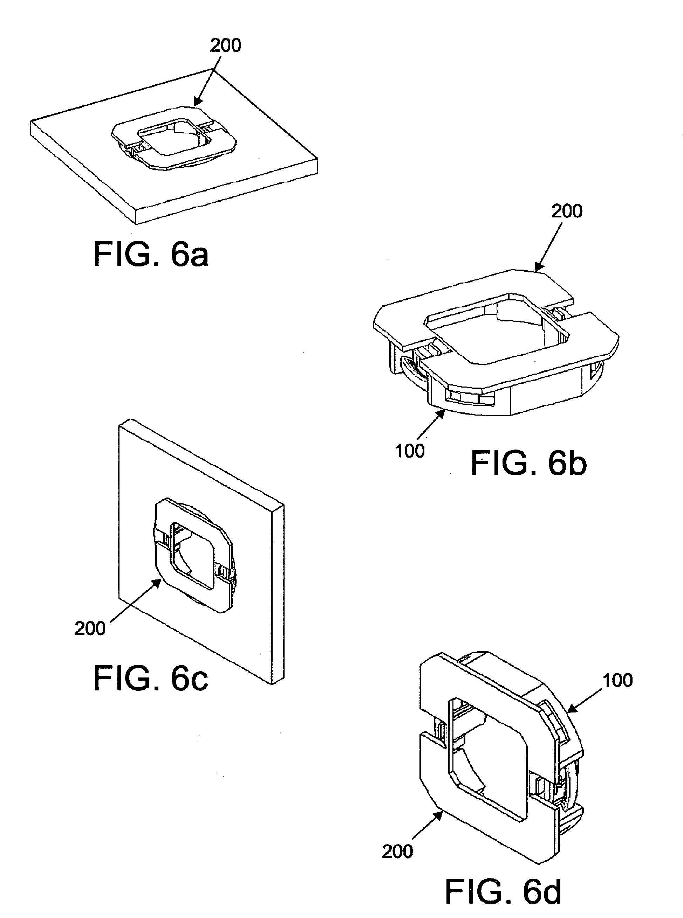

The prior art known from document WO 03/081054, see figures 1-8 and relevant passages in the description shows the following features of claim 1 of the present invention:
An assembly of an insertion member 1 and a receiving member 2 configured to be engaged by screw-less installation; a first engagement (fig. 1: engagement means 5 and 6) of the assembly restricts linear movement of the insertion member along a first axis, a second axis and a third axis (which third axis corresponds to the insertion direction), and rotation about the first axis and the second axis (thereby relative rotation of the insertion and receiving members 1,2 about the third axis is permitted to position the two members to each other in the circumferential direction), and a second engagement 14 (by means of a tool 14, fig. 6, which allows to spread the inner wall of the insertion member 2 to the receiving member 1 to frictionally engage these members, thereby it) restricts rotation about the third axis, thereby securely engaging the insertion member 1 with the receiving member 2 (, and thus the members 1,2 are fixed to each other in all degrees of freedom).

Therefore, there is a need to provide a metal parts free electrical box with an angular adjustability mechanism which is integral to the electrical boxes and obviates the above mentioned disadvantages.

### SUMMARY OF THE INVENTION

The main object of the present invention is to provide an electrical box with an integral angular adjustability mechanism, which obviates the use of screws.

Another object of the present invention is to provide an electrical box with an integral angular adjustability mechanism, which eliminates the use of any metal parts.

Another object of the present invention is to provide an electrical box with an integral angular adjustability mechanism, which eliminates use of any external or additional parts.

Another object of the present invention is to provide an electrical box with an integral angular adjustability mechanism, which provides quicker installation and dismantling of the assembly.

Yet another object of the present invention is to provide an electrical box with an integral angular adjustability mechanism, which provides tool-less installation and dismantling of the assembly. However the design also may be made for tooled removal and assembly.

Further object of the present invention is to provide an electrical box with an integral angular adjustability mechanism, which provides wide range of flexibility for angular alignment.

In order to achieve the above mentioned objects, the invention discloses an assembly of an insertion member and a receiving member configured to be engaged by screw-less, snap-in installation. The insertion member includes one or more bracket extended from a plane of the insertion member, a lower end of the one or more bracket including one or more tooth unit, and at least one guiding unit for securely engaging the insertion member with the receiving member. The receiving member includes one or more opening for complementarily engaging the one or more bracket of the insertion member, one or more resting surface including plurality of slots for engaging the one or more tooth unit of the one or more bracket, and at least one recess for receiving the at least one guiding unit. A first engagement of the assembly restricts linear movement of the insertion member along a first axis, a second axis and a third axis, and rotation about the first axis and the second axis. Further, a second engagement of the assembly restricts rotation about the third axis thereby securely engaging the insertion member with the receiving member.

In an embodiment, the receiving member further includes one or more holding member for engaging the one or more bracket temporarily in the first engagement of the assembly, the first engagement allowing angular adjustment of the insertion member with respect to the receiving member. Further, at least one recess of the receiving member comprises a dimension to allow the angular adjustment of the at least one guiding unit of the insertion member.

In another embodiment, the assembly includes slot-tooth mechanism integral to the assembly for the angular adjustment of the insertion member with respect to the receiving member in the first engagement.

In another embodiment, the insertion member is pre-assembled in the receiving member in the first engagement of the assembly.

In an embodiment, the receiving member and the insertion member are made of electrically non-conductive materials or electrically conductive materials. In another embodiment, the insertion member has a rectangular or circular or semi-circular or polygonal shape and the receiving member has a complementary rectangular or circular or semi-circular or polygonal aperture.

It is to be understood that both the foregoing general description and the following detailed description of the present embodiments of the invention are intended to provide an overview or framework for understanding the nature and character of the invention as it is claimed. The accompanying drawings are included to provide a further understanding of the invention and are incorporated into and constitute a part of this specification. The drawings illustrate various embodiments of the invention and together with the description serve to explain the principles and operation of the invention.

### BRIEF DESCRIPTION OF THE DRAWINGS

The above-mentioned and other features and other advantages of the invention will be better understood and will become more apparent by referring to the exemplary embodiments of the invention, as illustrated in the accompanying drawings, wherein
FIG. 1a-1e schematically illustrates the construction of a receiving member of an assembly according to one embodiment of the present invention;
FIG. 2a-2g schematically illustrates the construction of an insertion member of an assembly according to one embodiment of the present invention;
FIG. 3a-3d schematically illustrates the perspective views of the relative position of the receiving member shown in FIG. 1a-1e and the insertion member shown in FIG. 2a-2g before assembly according to one embodiment of the present invention;
FIG. 4a-4d schematically illustrates the cross-sectional views of the receiving member shown in FIG. 1a-1e and the insertion member shown in FIG. 2a-2g before assembly according to one embodiment of the present invention;
FIG. 5a-5d schematically illustrates the cross-sectional side views the receiving member shown in FIG. 1a-1e and the insertion member shown in FIG. 2a-2g before assembly according to one embodiment of the present invention;
FIG. 6a-6d schematically illustrates the perspective views of the receiving member shown in FIG. 1a-1e and the insertion member shown in FIG. 2a-2g in a first engagement of the assembly according to one embodiment of the present invention;
FIG. 7a-7e schematically illustrates the cross-sectional views of the receiving member shown in FIG. 1a-1e and the insertion member shown in FIG. 2a-2g in a first engagement of the assembly according to one embodiment of the present invention;
FIG 8a-8e schematically illustrates the cross-sectional side views of the receiving member shown in FIG. 1a-1e and the insertion member shown in FIG. 2a-2g in a first engagement of the assembly according to one embodiment of the present invention;
FIG. 9a-9d schematically illustrates the perspective views of the receiving member shown in FIG. 1a-1e and the insertion member shown in FIG. 2a-2g in a second engagement of the assembly according to one embodiment of the present invention;
FIG. 10a-10e schematically illustrates the cross-sectional views of the receiving member shown in FIG. 1a-1e and the insertion member shown in FIG. 2a-2g in a second engagement of the assembly according to one embodiment of the present invention;
FIG. 11a-11e schematically illustrates the cross-sectional side views of the receiving member shown in FIG. 1a-1e and the insertion member shown in FIG. 2a-2g in a second engagement of the assembly according to one embodiment of the present invention;
FIG. 12a-12e schematically illustrates working of the assembly in the first engagement and second engagement according to one embodiment of the present invention;
FIG. 13a-13e schematically illustrates the cross sectional views of the receiving member shown in FIG. 1a-1e and the insertion member shown in FIG. 2a-2g in a first engagement of the assembly according to another embodiment of the present invention;
FIG. 14a-14e schematically illustrates the cross sectional views of the receiving member shown in FIG. 1a-1e and the insertion member shown in FIG. 2a-2g in a second engagement of the assembly according to another embodiment of the present invention; and
FIG. 15a-15c schematically illustrates the removal mechanism of the insertion member shown in FIG. 2a-2e from the receiving member shown in FIG. 1a-1d according to one embodiment of the present invention.

### DETAILED DESCRIPTION OF THE INVENTION

Reference will now be made to the exemplary embodiments of the invention, as illustrated in the accompanying drawings. Where ever possible same numerals will be used to refer to the same or like parts.

Disclosed herein is an assembly of an insertion member and a receiving member which are engaged by screw-less snap-in installation. FIG. 1a-1e schematically illustrates the construction of such a receiving member 100 of an assembly according to one embodiment of the present invention. For example, such an assembly may be used in an electrical environment. The receiving member 100 may include an electrical box. The receiving member 100 may be made of any material depending on its application. However, in the present embodiment, it is made of an electrically non-conductive material such as plastic.

The receiving member 100 may have any shape such as circular, semi-circular, rectangular, polygonal and so forth. The two sides of the receiving member 100 may include two complementary openings 102. The complementary openings 102 facilitate snap-in engagement mechanism. Further, the receiving member 100 includes two resting surfaces 104 for accommodating two brackets. The resting surface 104 may have plurality of slots 106 made on them. The slots 106 ensure secure assembly of the receiving member 100 with the insertion member. The slots 106 may have various shapes such as oval, round, gear teeth and so forth. Further, the pitch between the slots may vary as per application need. The receiving member 100 further includes four recesses 108 placed at the four corners. The recesses 108 may also facilitate in secure mounting of the assembly. The receiving member further includes two holding members 110. The holding members110 enables to achieve two stage engagements in the present assembly.

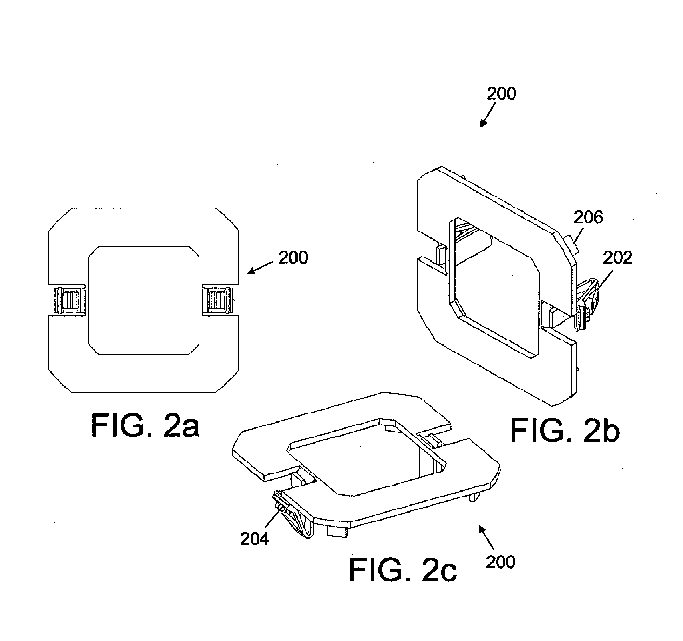

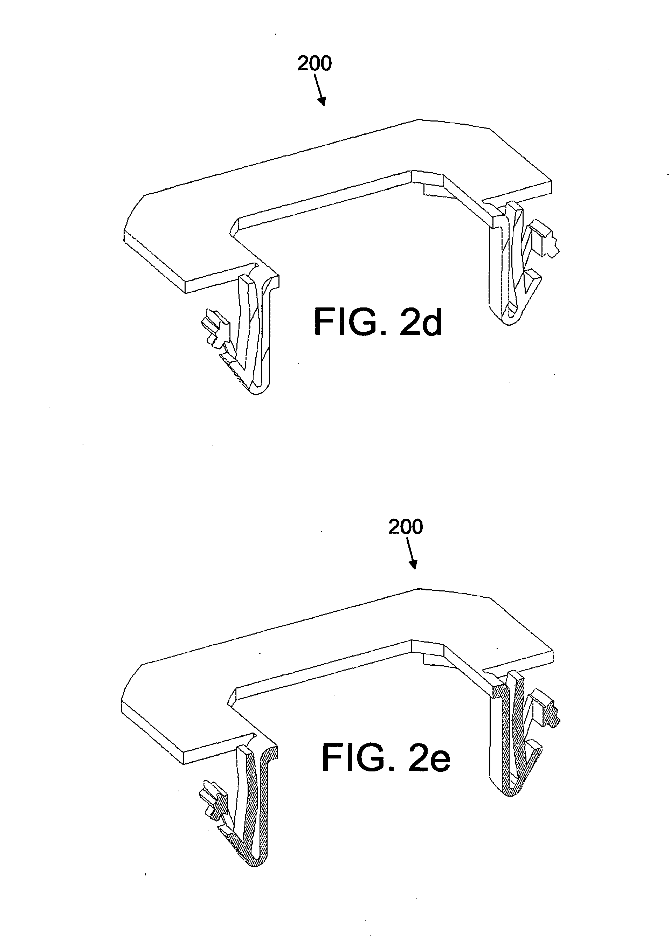

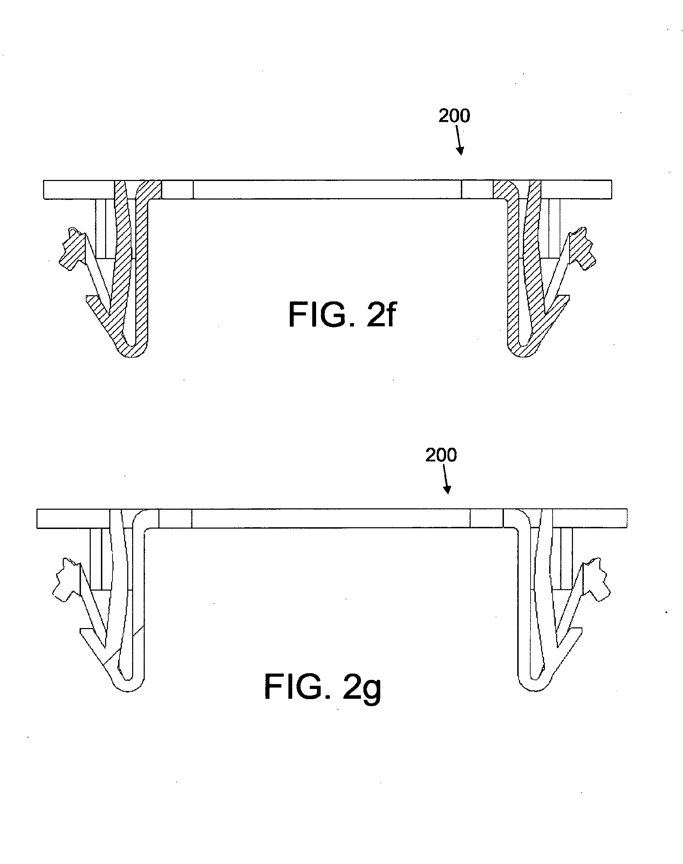

FIG. 2a-2g schematically illustrates the construction of the insertion member 200 of an assembly according to one embodiment of the present invention. For example, in an electrical environment the insertion member 200 may include a fixing frame or a technical frame. Generally, an aesthetic frame may cover the fixing frame for aesthetic appeal. The insertion member 200 may be made of any material which provides required flexibility to deform in multi stage engagement mechanism. However in the present embodiment, the insertion member 200 may be made of electrically non-conductive material such as plastic, fiber and so forth. The insertion member 200 may have a shape complementarily matching the shape of the receiving member 100.

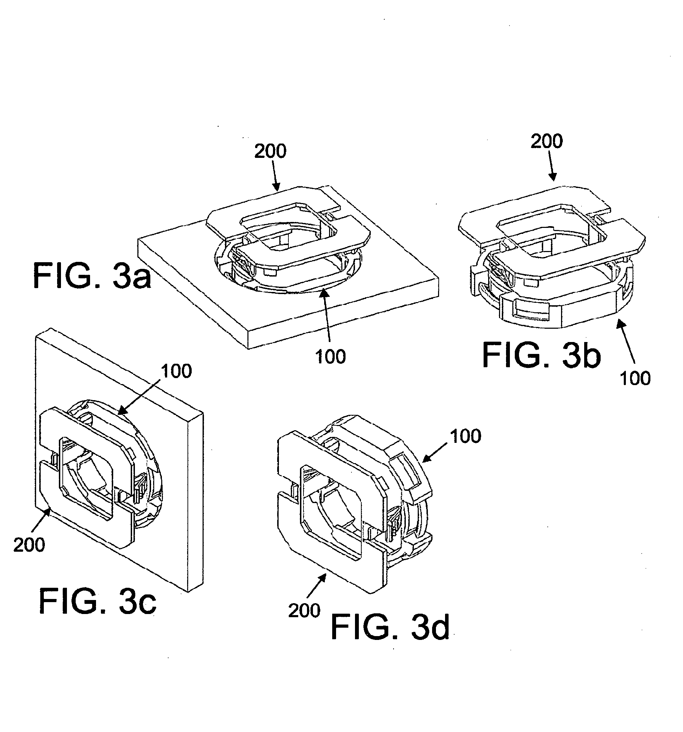

The insertion member 200 may include includes two brackets 202. The brackets 202 extend from the plane of the insertion member 200. The lower end of the brackets 202 further includes plurality of teeth unit 204. In the engaged state, the teeth unit 204 seat on the slots 106 of the receiving member 100. The teeth unit 204 may include various complementary shapes to index to the slots 106 of various shapes such as oval, round, gear teeth and so forth. Additionally, the insertion member 200 may include plurality of guiding units. In the present embodiment, the insertion unit includes four guiding units 206 placed at the four corners of the insertion member 200. In the assembled state, the guiding units 206 get engaged with the recesses 108 of the receiving unit 100. FIG. 3-11 illustrates in detail the various stages of engagement of the insertion member 200 with the receiving member 100.

FIG. 3a-3d schematically illustrates the perspective views of the relative position of the receiving member 100 and the insertion member 200 before assembly according to one embodiment of the present invention. In another embodiment, the receiving member 100 may be installed on a surface such as a wall, floor, roof and so forth. In such cases, the complementary opening 102 may remain exposed from an aperture made in such surface for receiving the brackets 202. FIG. 3a and FIG. 3c illustrate such an assembly installed in a wall. However, FIG. 3b and FIG. 3d illustrate such snap-in assembly without wall structure. As the assembly uses a snap-in mechanism, therefore no screw is required for the assembly. This may be apparent from the diagrams FIG. 3a-3d.

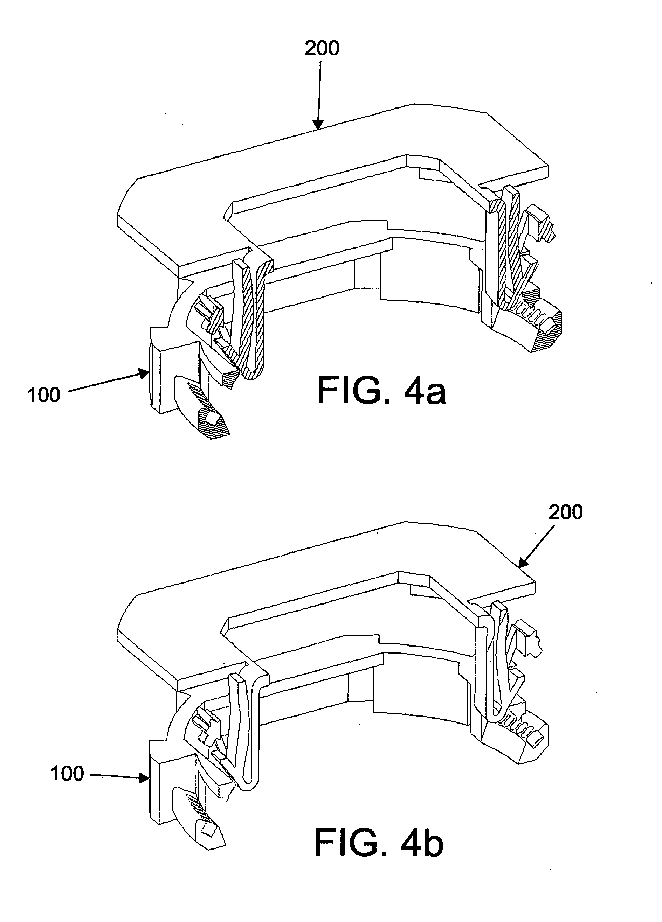

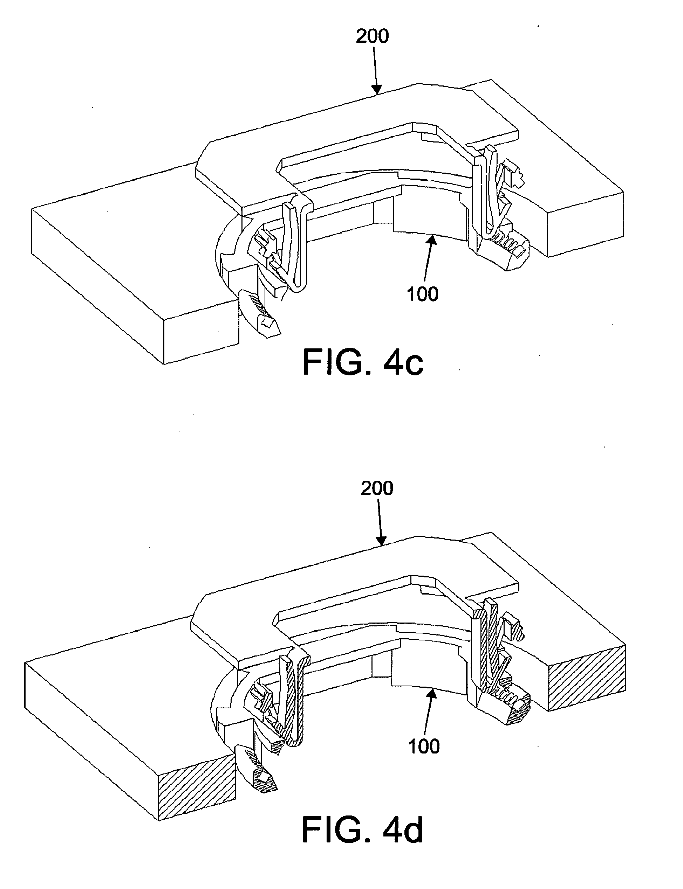

FIG. 4a-4d schematically illustrates the cross-sectional views of the receiving member 100 and the insertion member 200 before assembly according to one embodiment of the present invention. Further, FIG. 4a and FIG. 4c illustrate the cross sectional views with the receiving member 100 installed in the wall. FIG. 4b and FIG. 4d illustrate the assembly without the wall.

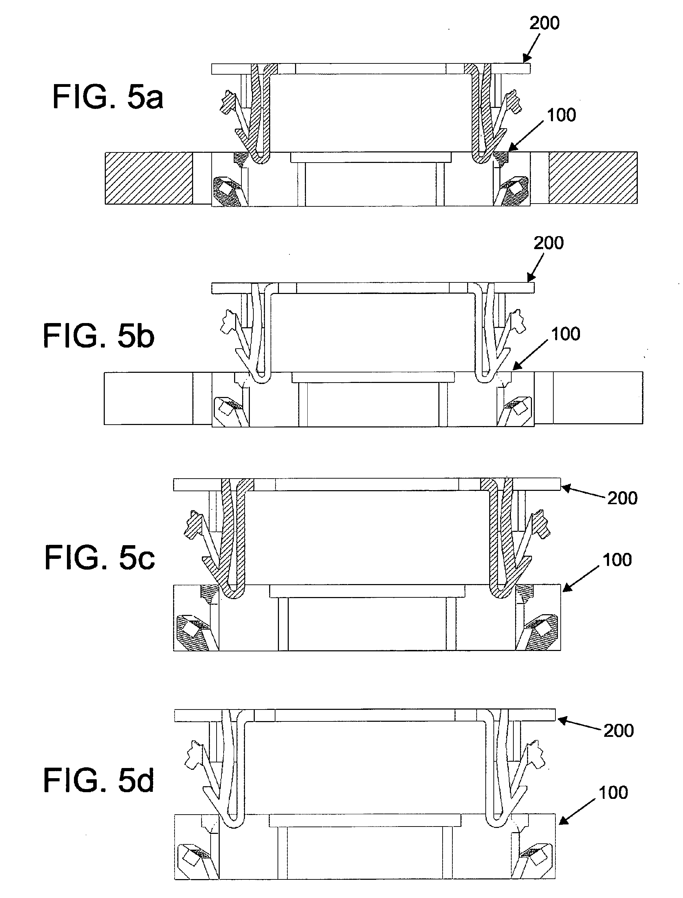

FIG. 5a-5d schematically illustrates the cross-sectional side views the receiving member 100 and the insertion member 200 before assembly according to one embodiment of the present invention. Further, FIG. 5a and FIG. 5c show the cross-sectional side views with the wall.

FIG. 6a-6d schematically illustrates the perspective views of the receiving member 100 and the insertion member 200 in a first engagement of the assembly according to one embodiment of the present invention. FIG. 6a and FIG. 6c show the assembly with the wall. In the first engagement, the brackets 202 of the insertion member 200 get inserted within the complementary openings 102 of the receiving unit 100 and temporarily rest on the holding members 110. At this stage, the movement of the insertion member 200 is restricted by five degrees of freedom with respect to the receiving member 100. For example, the five degrees of freedom include translation along X, Y, Z axis, and rotation about X, and Y axis. Only rotation about Z axis is permitted at this stage.

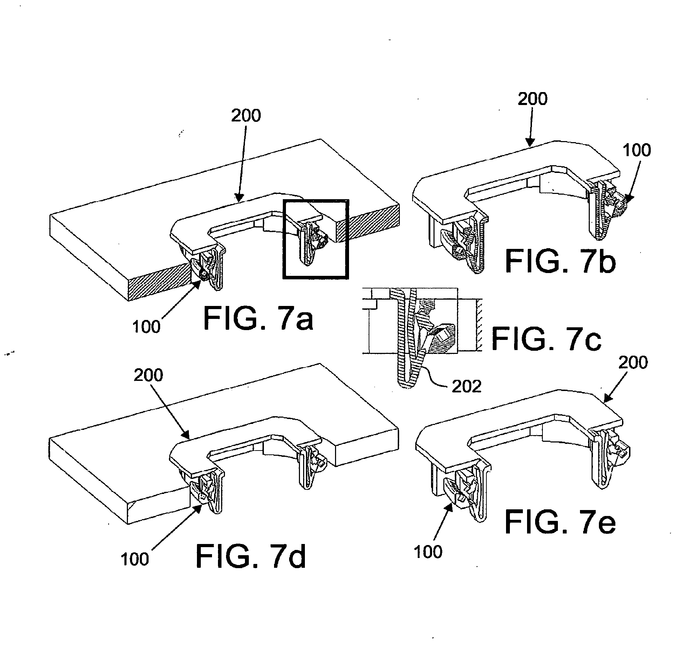

FIG. 7a-7e schematically illustrates the cross-sectional views of the receiving member 100 and the insertion member 200 in a first engagement of the assembly according to one embodiment of the present invention. Further, FIG. 7a and FIG. 7c illustrate the assembly in the first engagement with the wall. FIG. 7e illustrates an exploded view of one of the brackets 202 inserted within one of the complementary openings 102, wherein the brackets 202 rest on the holding members 110.

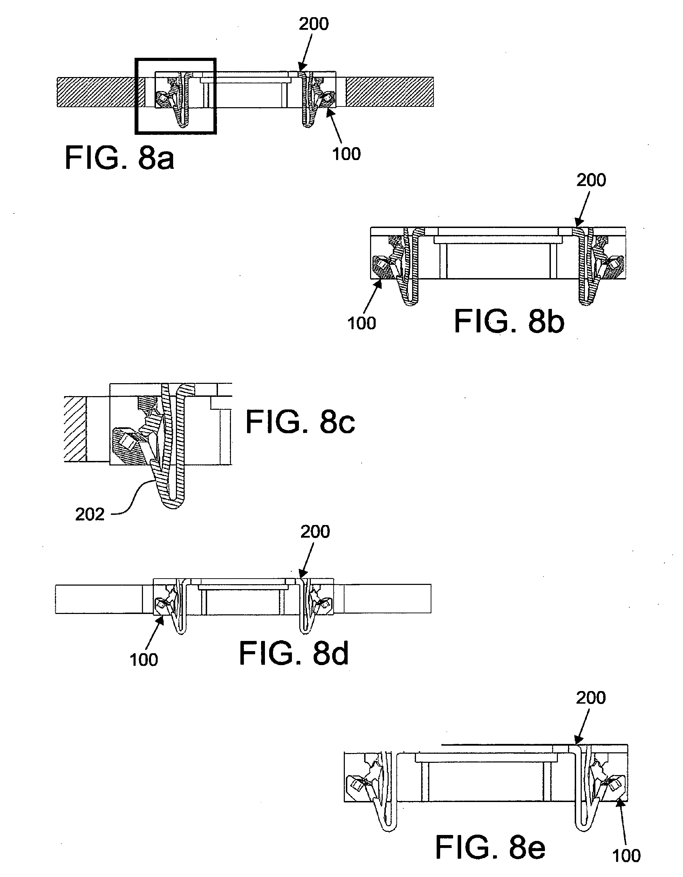

FIG 8a-8e schematically illustrates the cross-sectional side views of the receiving member 100 and the insertion member 200 in a first engagement of the assembly according to one embodiment of the present invention. FIG. 8a and FIG. 8c illustrate the assembly in the first engagement with the wall. FIG. 8e illustrates an exploded cross-sectional view of one of the brackets 202 inserted within one of the complementary openings 102, wherein the brackets 202 rest on the holding members 110.

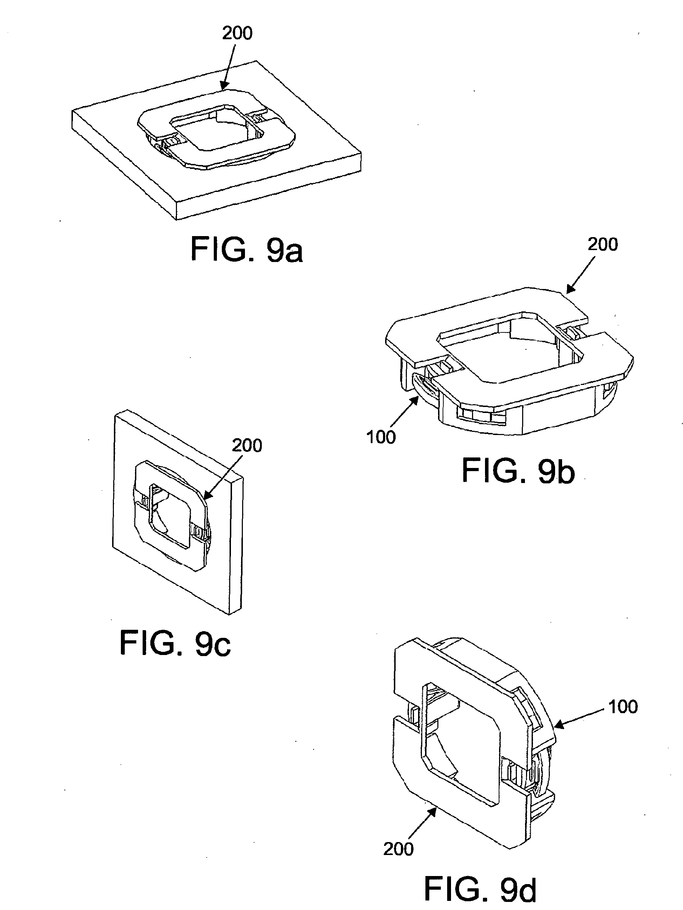

FIG. 9a-9d schematically illustrates the perspective views of the receiving member 100 and the insertion member 200 in a second engagement of the assembly according to one embodiment of the present invention. FIG. 9a and FIG. 9c illustrate the assembly in the second engagement with the receiving member 100 installed in the wall. The angular position of the insertion member 200 may be adjusted with respect to the receiving member 100, before the second engagement. In case the receiving member 100 is installed oblique in the wall, by adjusting the angular position of the insertion member 200 with respect to the receiving member 100, the final assembly can be mounted straight. After adjusting the angular position, the teeth unit 204 may be engaged with the slots 106 for securely engaging the insertion member 200 with the receiving member 100. At this stage of the assembly, the movement of the insertion member 200 is restricted by all six degrees of freedom.

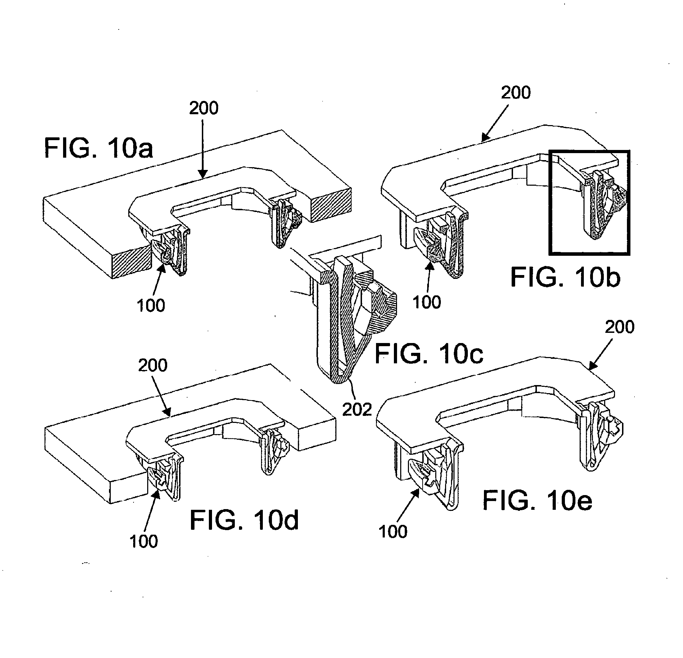

FIG. 10a-10e schematically illustrates the cross-sectional views of the receiving member 100 and the insertion member 200 in a second engagement of the assembly according to one embodiment of the present invention. FIG. 10a and FIG. 10c show the cross-sectional views in the second engagement with the wall. FIG. 10e illustrates an exploded cross-sectional view of one of the bracket 202 inserted within one of the complementary opening 102, wherein the teeth unit 204 is inserted within the slots 106.

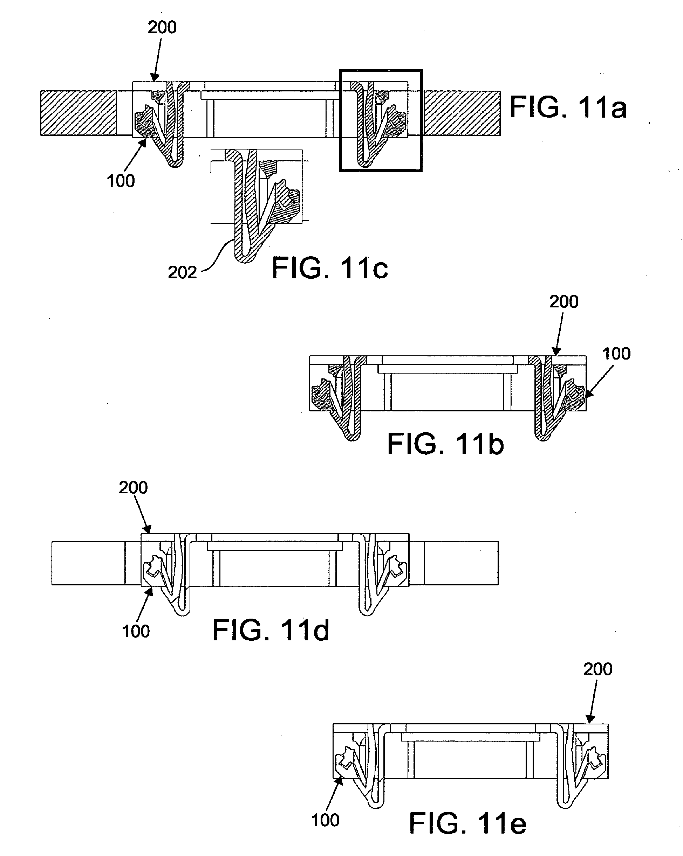

FIG. 11a-11e schematically illustrates the cross-sectional side views of the receiving member 100 and the insertion member 200 in a second engagement of the assembly according to one embodiment of the present invention. FIG. 11a and FIG. 11c show the cross-sectional views in the second engagement with the wall. FIG. 11e illustrates an exploded cross-sectional view of one of the bracket 202 inserted within one of the complementary opening 102, wherein the teeth unit 204 is inserted within the slots 106.

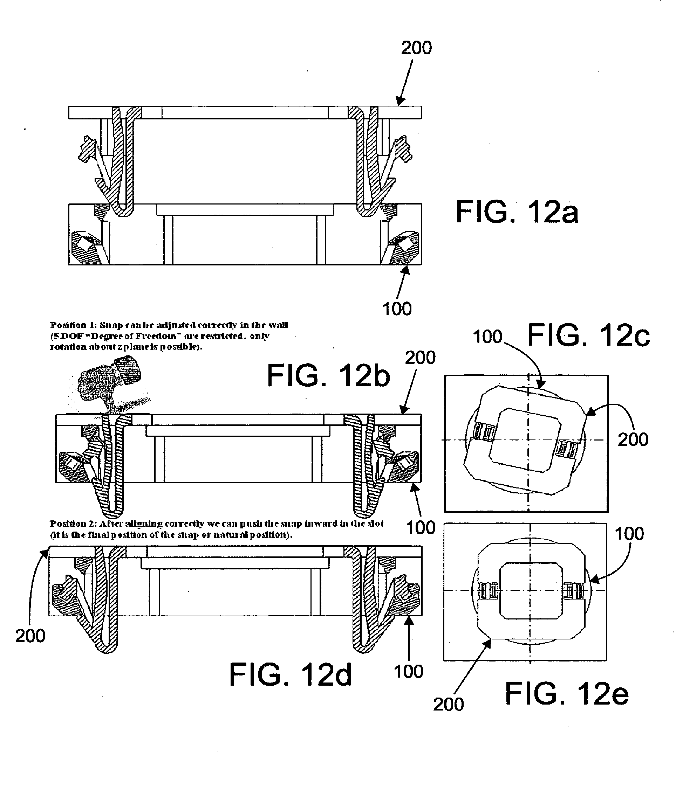

FIG. 12a-12e schematically illustrates working of the assembly in the first engagement and second engagement according to one embodiment of the present invention. FIG. 12a illustrates the position of the receiving member and the insertion member in the pre-assembled stage. FIG. 12b-12c illustrates the position of the assembly in the first engagement. As described above, in the first engagement the movement of the insertion member with respect to the receiving member is restricted in five degrees of freedom, however, only rotation about Z axis is possible in this stage. FIG. 12d-12e illustrates the assembly in the second engagement. After aligning the angular position correctly, the brackets of the insertion member are pushed to lock into the slots of the receiving member. In this final position, the insertion member is securely locked with the receiving member, restricting movement in all six degrees of freedom. FIG. 12c and 12e illustrates top views of the assembly in the first engagement and in the second engagement.

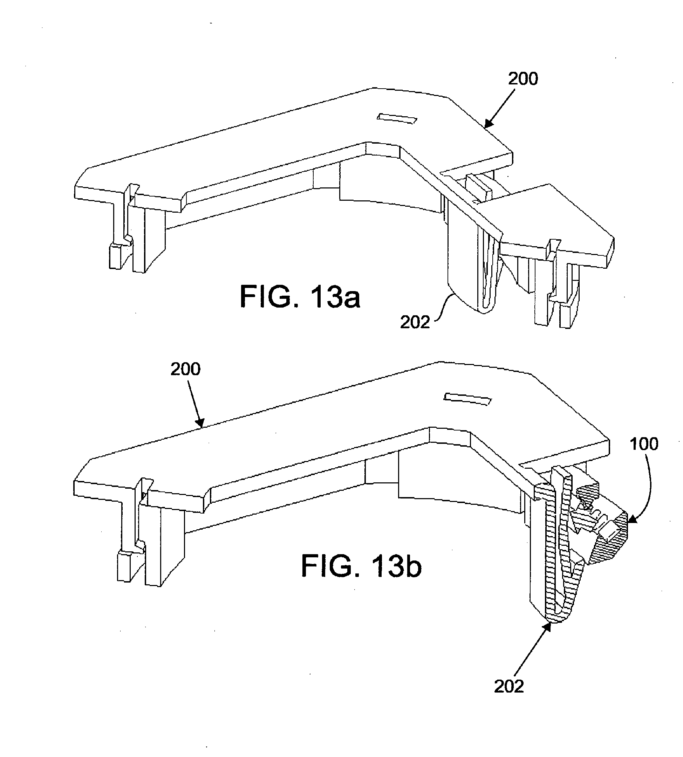

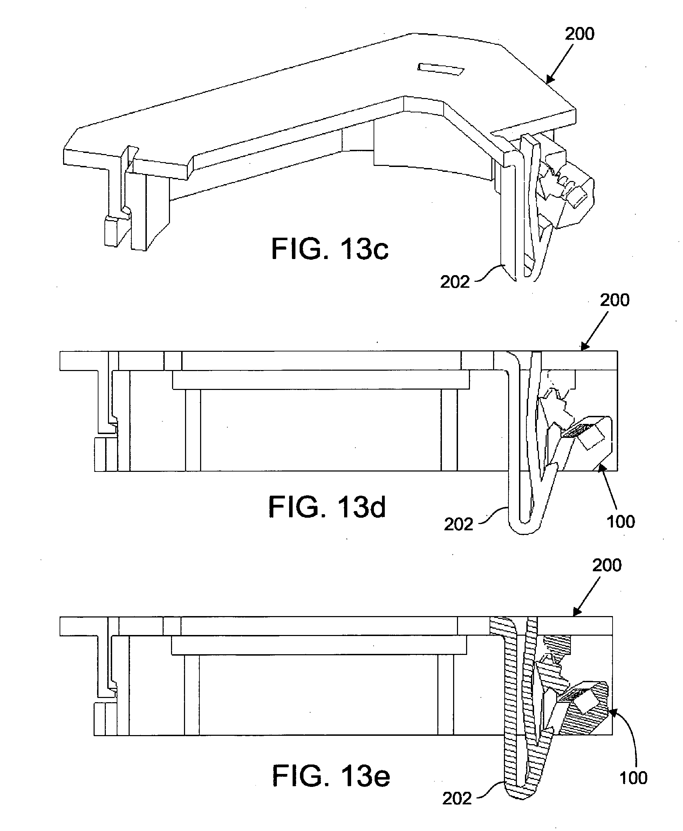

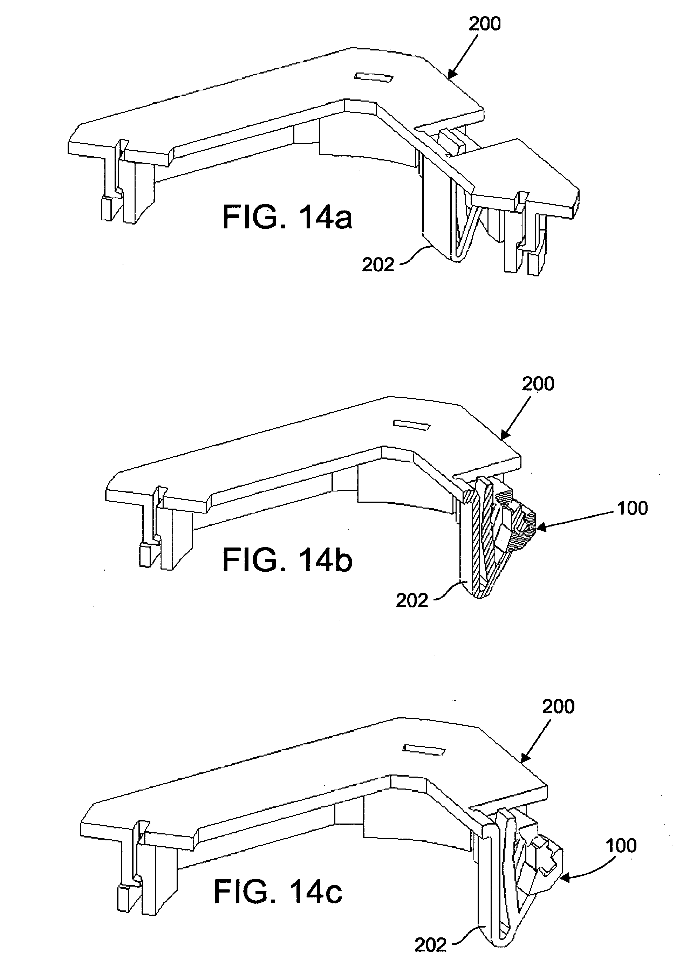

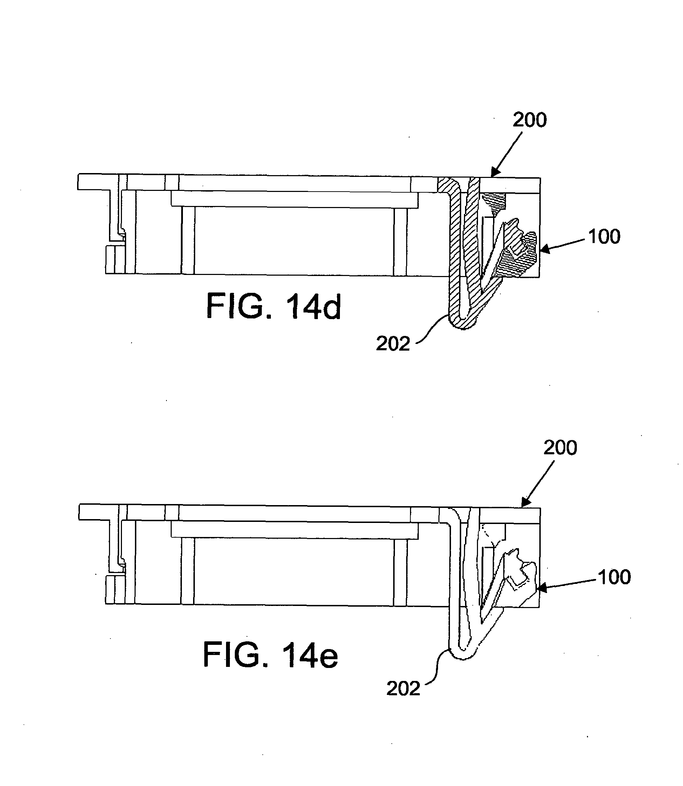

FIG. 13a-13e schematically illustrates the cross sectional views of the receiving member 100 and the insertion member 200 in a first engagement of the assembly according to another embodiment of the present invention. In the present embodiment, the insertion member 200 is pre-assembled or factory-assembled to the receiving member 100 in the first engagement stage. At this stage movement of the insertion member 200 in all degrees of freedom are restricted accept angular adjustability. After aligning the angular position correctly, the bracket 202 of the insertion member may be pushed to the second engagement state, where the insertion member is restricted of movement in all six degrees of freedom (illustrated in FIG. 14a-14e). In such preassembled case before doing final snapping, the parts remain in first engagement position where only option of rotation of the top part with respect to bottom housing is available.

In another embodiment, the number of brackets may vary as per the size of the box. In yet another embodiment, there may be guiding member at one end and bracket at another end.

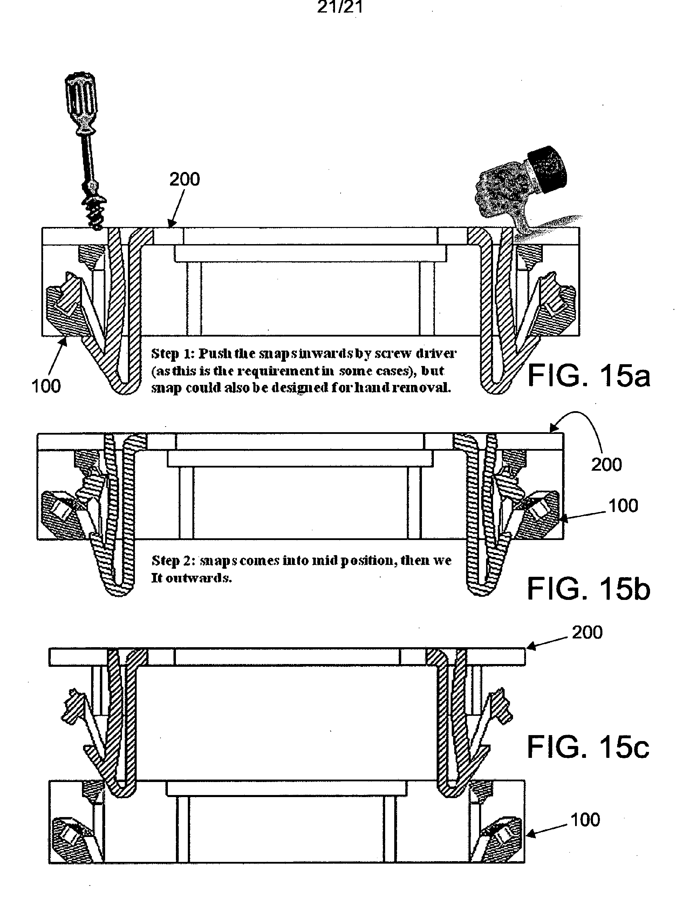

FIG. 15a-15c schematically illustrates the removal mechanism of the insertion member 200 from the receiving member 100 according to one embodiment of the present invention. FIG. 15a shows the teeth unit 204 in fully engaged sate with the slots 106. In this position the brackets 202 may be pushed inward to release the teeth unit 204 from the slots 106. This may be done using the hand of the operator or with the help of a screw driver. By doing this, the teeth unit 204 disengage from the slots 106 and is ready to be released, as shown in the FIG. 15b. In this stage, the insertion member 200 may be pulled outward to disengage it completely from the receiving member 100. In this way the assembly is disengaged and may be adjusted for reengagement.

In the present invention, the components of the assembly members are made of electrically non-conductive plastic material. Therefore, in case similar assembly is used for electrical box, there is no chance of short-circuit and damage of live wires from such assembly members. Further, this assembly avoids using screws and other metal parts. Use of snap-in assembly makes it quicker for installation and dismantling the assembly. No use of tools or screwdriver, renders such assembly as tool-less or tool-free assembly.

It is to be understood by a person of ordinary skill in the art that various modifications and variations may be made without departing from the scope of the present invention. The present invention covers such modifications and variations provided they come within the ambit of the appended claims.

## Claims

1. An assembly of an insertion member and a receiving member configured to be engaged by screw-less, snap-in installation,
the insertion member comprising:
one or more bracket extended from a plane of the insertion member, a lower end of the one or more bracket including one or more tooth unit; and
at least one guiding unit for securely engaging the insertion member with the receiving member,
the receiving member comprising:
one or more opening for complementarily engaging the one or more bracket of the insertion member, one or more resting surface thereof including plurality of slots for engaging the one or more tooth unit of the one or more bracket; and
at least one recess for receiving the at least one guiding unit,
wherein, a first engagement of the assembly restricts linear movement of the insertion member along a first axis, a second axis and a third axis, and rotation about the first axis and the second axis, and
a second engagement of the assembly restricts rotation about the third axis thereby securely engaging the insertion member with the receiving member.

2. The assembly according to claim 1, wherein the receiving member further comprises one or more holding member for engaging the one or more bracket temporarily in the first engagement of the assembly, the first engagement allowing angular adjustment of the insertion member with respect to the receiving member.

3. The assembly according to claim 2, wherein the at least one recess of the receiving member comprises a dimension to allow the angular adjustment of the at least one guiding unit of the insertion member.

4. The assembly according to claim 2, comprises slot-tooth mechanism integral to the assembly for the angular adjustment of the insertion member with respect to the receiving member in the first engagement.

5. The assembly according to claim 1, wherein the insertion member is pre-assembled in the receiving member in the first engagement of the assembly.

6. The assembly according to claim 1, wherein the receiving member and the insertion member are made of at least one selected from the group of electrically non-conductive materials and electrically conductive materials.

7. The assembly according to claim 1, wherein the insertion member has at least one shape selected from the group of rectangular, circular, semi-circular, and polygonal and the receiving member has a complementary rectangular, circular, semi-circular, and polygonal aperture.

## Patentansprüche

1. Anordnung aus einem Einsteckelement und einem Aufnahmeelement, die gestaltet sind, um durch eine schraubenlose Schnappmontage in Eingriff gebracht zu werden,
wobei das Einsteckelement Folgendes umfasst:
eine oder mehrere Klammern, die sich von einer Ebene des Einsteckelements erstrecken, wobei ein unteres Ende der einen oder mehreren Klammern eine oder mehrere Verzahnungseinheiten umfasst; und
mindestens eine Führungseinheit zum sicheren Einrasten des Einsteckelements in das Aufnahmeelement,
wobei das Aufnahmeelement Folgendes umfasst:
eine oder mehrere Öffnungen für den komplementären Eingriff mit der einen oder den mehreren Klammern des Einsteckelements, wobei eine oder mehrere Anlageflächen derselben eine Vielzahl von Schlitzen für den Eingriff mit der einen oder den mehreren Verzahnungseinheiten der einen oder mehreren Klammern umfasst; und
mindestens eine Vertiefung zum Aufnehmen der mindestens einen Führungseinheit,
wobei ein erster Eingriff der Anordnung die lineare Bewegung des Einsteckelements entlang einer ersten Achse, einer zweiten Achse und einer dritten Achse und die Drehung um die erste Achse und die zweite Achse beschränkt, und
ein zweiter Eingriff der Anordnung die Drehung um die dritte Achse beschränkt und dadurch das Einsteckelement sicher mit dem Aufnahmeelement in Eingriff stehen lässt.

2. Anordnung nach Anspruch 1, wobei das Aufnahmeelement ferner eines oder mehrere Halteelemente umfasst, um die eine oder mehreren Klammern vorübergehend im ersten Eingriff der Anordnung in Eingriff zu bringen, wobei der erste Eingriff die Winkeleinstellung des Einsteckelements gegenüber dem Aufnahmeelement ermöglicht.

3. Anordnung nach Anspruch 2, wobei die mindestens eine Vertiefung des Aufnahmeelements ein Maß umfasst, um die Winkeleinstellung der mindestens einen Führungseinheit des Einsteckelements zu ermöglichen.

4. Anordnung nach Anspruch 2, die einen mit der Anordnung einstückigen Schlitz-Zahn-Mechanismus für die Winkeleinstellung des Einsteckelements gegenüber dem Aufnahmeelement im ersten Eingriff umfasst.

5. Anordnung nach Anspruch 1, wobei das Einsteckelement in das Aufnahmeelement im ersten Eingriff der Anordnung vormontiert ist.

6. Anordnung nach Anspruch 1, wobei das Aufnahmeelement und das Einsteckelement aus mindestens einem hergestellt sind, das aus der Gruppe von elektrisch nicht leitenden Materialien und elektrisch leitenden Materialien ausgewählt ist.

7. Anordnung nach Anspruch 1, wobei das Einsteckelement mindestens eine Form aufweist, die aus der Gruppe von rechteckig, kreisförmig, halbkreisförmig und vieleckig ausgewählt ist, und das Aufnahmeelement eine komplementäre rechteckige, kreisförmige, halbkreisförmige und vieleckige Öffnung aufweist.

## Revendications

1. Ensemble d'un élément d'insertion et d'un élément récepteur configurés pour être engagés par installation par enclenchement sans vis,
l'élément d'insertion comprenant :
une ou plusieurs pattes s'étendant à partir d'un plan de l'élément d'insertion, une extrémité inférieure des une ou plusieurs pattes comprenant une ou plusieurs unités de dent ; et
au moins une unité de guidage pour engager de manière sûre l'élément d'insertion avec l'élément récepteur,
l'élément récepteur comprenant :
une ou plusieurs ouvertures pour engager de manière complémentaire les une ou plusieurs pattes de l'élément d'insertion, une ou plusieurs surfaces d'appui de celles-ci comprenant une pluralité de fentes pour engager les une ou plusieurs unités de dent des une ou plusieurs pattes ; et
au moins un évidement pour recevoir l'au moins une unité de guidage,
dans lequel, un premier engagement de l'ensemble restreint un mouvement linéaire de l'élément d'insertion suivant un premier axe, un deuxième axe et un troisième axe, et une rotation autour du premier axe et du deuxième axe, et
un deuxième engagement de l'ensemble restreint une rotation autour du troisième axe en engageant ainsi de manière sûre l'élément d'insertion avec l'élément récepteur.

2. Ensemble selon la revendication 1, dans lequel l'élément récepteur comprend en outre un ou plusieurs éléments de maintien pour engager temporairement les une ou plusieurs pattes dans le premier engagement de l'ensemble, le premier engagement permettant un ajustement angulaire de l'élément d'insertion par rapport à l'élément récepteur.

3. Ensemble selon la revendication 2, dans lequel l'au moins un évidement de l'élément récepteur comprend une dimension pour permettre l'ajustement angulaire de l'au moins une unité de guidage de l'élément d'insertion.

4. Ensemble selon la revendication 2, comprenant un mécanisme fente-dent intégral avec l'ensemble pour l'ajustement angulaire de l'élément d'insertion par rapport à l'élément récepteur dans le premier engagement.

5. Ensemble selon la revendication 1, dans lequel l'élément d'insertion est pré-assemblé dans l'élément récepteur dans le premier engagement de l'ensemble.

6. Ensemble selon la revendication 1, dans lequel l'élément récepteur et l'élément d'insertion sont constitués d'au moins un matériau sélectionné à partir du groupe de matériaux électriquement non conducteurs et de matériaux électriquement conducteurs.

7. Ensemble selon la revendication 1, dans lequel l'élément d'insertion a au moins une forme sélectionnée dans le groupe de formes rectangulaire, circulaire, semi-circulaire et polygonale et l'élément récepteur a une ouverture rectangulaire, circulaire, semi-circulaire et polygonale complémentaire.
